# EUROPÄISCHE PATENTSCHRIFT

(11) **EP 0 764 258 B1**
(45) Veröffentlichungstag und Bekanntmachung des Hinweises auf die Patenterteilung: **13.01.1999**
(21) Anmeldenummer: 95921836.3
(22) Anmeldetag: 06.06.1995
(51) Int. Cl.: F28C 1/00

(54) **ANORDNUNG ZUR EINBINDUNG VON REINGASKANÄLEN EINER RGE-ANLAGE EINES MIT FOSSILEN BRENNSTOFFEN GEFEUERTEN KRAFTWERKES IN EINEN NATURZUGNASS-KÜHLTURM**
DEVICE FOR INCORPORATING THE PURIFIED-GAS DUCTS FROM A FOSSIL-FUEL POWER STATION DESULPHURIZATION PLANT IN A NATURAL-CONVECTION WET COOLING POWER
SYSTEME PERMETTANT DE RELIER LES CONDUITES DE GAZ PURIFIE D'UNE INSTALLATION DE DESULFURATION DES GAZ DE FUMEE D'UNE USINE ELECTRIQUE A COMBUSTIBLES FOSSILES DANS UNE TOUR DE REFROIDISSEMENT A TIRAGE NATUREL

(30) Priorität: 07.06.1994 DE 4420229
(43) Veröffentlichungstag der Anmeldung: 26.03.1997
(73) Patentinhaber: HAMON Kühltürme u. Apparatebau GmbH, 44803 Bochum (DE); Balcke-Dürr GmbH, 40882 Ratingen (DE)
(72) Erfinder: DIETRICH, Stefan, D-10829 Berlin (DE)
(74) Vertreter: Stenger, Watzke & Ring Patentanwälte
(86) Internationale Anmeldenummer: EP9502161
(87) Internationale Veröffentlichungsnummer: WO9533966

(56) Entgegenhaltungen:
- EP-A- 0 155 340
- DE-C- 3 518 787
- US-A- 3 488 960

## Beschreibung

Die Erfindung betrifft eine Anordnung zur Einbindung von Reingasleitungen einer Rauchgasentschwefelungsanlage eines mit fossilen Brennstoffen gefeuerten Kraftwerkes in einen Naturzugnaß-Kühlturm, wobei der Bau von Schornsteinen vermieden wird.

Bekannt ist die vollständige Einbindung von gereinigten Rauchgasen zum Zwecke einer möglichst vollständigen Durchmischung in Kühltürme, wobei der Reingaskanal nach seinem Austritt aus der Rauchgasentschwefelungsanlage über eine Abwinkelung vertikal und anschließend wieder horizontal umgelenkt ist. Der Reingaskanal ist dabei mehrfach unterstützt und mündet kurz oberhalb der Wasserverteilungsebene in den Kühlturm.
Der Nachteil dieser konstruktiven Gestaltung sind die hohen Kosten für das oder die notwendigen Auflager der Reingasleitung. Die vorhandenen zwei 90 °-Umlenkungen binden hohe Investitionskosten, verursachen zugleich hohe Druckverluste, wodurch sich der elektrische Energiebedarf zum Antrieb der Saugzuggebläse erhöht und unterliegen einem erhöhten Abrieb/Verschleiß. Die Gase münden im unteren Bereich des Kühlturmes ein und haben aufgrund des vorhandenen Durchmischungseffektes Kontakt mit den Kühlturmwänden, was zu verstärkter Schalenbelastung durch chemische Einflüsse führt und zusätzliche Schutzmaßnahmen erfordert.

Weiterhin bekannt ist es, Rauchgase über eine horizontale Rohrleitung in den Kühlturm unmittelbar oberhalb der Wärmetauschkörper, der Wasserverteilvorrichtungen sowie der Tropfenabscheider einzuleiten (DE-PS 37 09 553).
In der vorliegenden Lösung ist keine Aussage über die konstruktive Gestaltung der Einbindung der Rauchgase in den Kühlturm gesagt. Weiterhin ist unklar, ob es sich um gereinigte oder ungereinigte Rauchgase handelt.

Die direkte Einmündung der Rauchgase in den Kühlturmschwaden erfolgt über konstruktiv unterschiedlich ausgebildete Vorrichtungen, die in der Regel mit verschieden gestalteten Austrittsöffnungen zur besseren Vermischung der Rauchgase mit den Kühlturmschwaden versehen sind (DE-A-33 21 961, DE-A-34 33 707, DE-A-33 27 931).

Dieser Vermischungseffekt wird durch Öffnungen im oberen Scheitelpunkt erreicht, die sich nahezu über die gesamte Länge der Rohrleitungen innerhalb des Kühlturmes erstrecken und die von Auslaßkammern überragt werden. Die Vermischung kann jedoch aufgrund von vorhandener chemischer Aggressivität des Reingases mittel- und langfristig zu Schäden des Betons und Teilen der Bewehrung führen, so daß Investitionskosten zur Erhaltung der Bausubstanz erforderlich werden können.

Es ist aus der, den nächst Kommenden Stand der Technik bildenden, DE-C-3518787 bekannt, Rauchgase oberhalb der Wärmetauscherelemente in den Kühlturm über einen diffusorartigen Zylinder mit verstellbarer vertikaler Abschirmung einzuleiten. Die dabei offenbarte Vorrichtung zielt auf eine bessere Vermischung des eingeleiteten Gasstromes mit dem aufsteigenden Kühlluftstrom ab, um eine Berührung der Kühlrauminnenschalung mit Schadstoffen zu vermeiden. Durch eine Verstellung des radialen Strömungsquerschnittes am Zylinder soll eine bessere Anpassung an unterschiedliche Betriebszustände möglich sein.
Gerade die bessere Vermischung beider genannter Ströme führt jedoch bekannterweise zu einer Erhöhung der Aggressivität des Gemisches, was bei einem Kontakt mit der Innenwandung zu erhöhtem Risiko führt. Die Lösung weist eine Gasleitung im Kühlturm auf.

Darüber hinaus ist ein in Kühltürmen integriertes Schornsteinsystem zur Ableitung von Gasströmen aus fossil gefeuerten als auch aus Kernkraftwerken bekannt (US-PS 3 488 960). Der genannten Lösung liegt zugrunde, daß ein aus rostfreiem Stahl gefertigter Schornstein zentrisch im Kühlturm angeordnet.

Dieser Schornstein wird durch einen aus bewehrtem Beton oder Mauerwerk hergestellten belüfteten Turm umschlossen und getragen.
Ziel dieser Konstruktion ist es ebenfalls, eine Vermischung des abzuführenden Gasstromes mit dem Kühlturmschwaden zu erreichen. Die Schädigung der Kühlturmschale bleibt unberücksichtigt. Die Lösung erfordert zusätzlichen Investitionsaufwand für den notwendigen Turm und umfangreiche Einrichtungen zur Begehung.
Die Einleitung der Gasleitung in den Kühlturm erfolgt unmittelbar über die Wasserverteilungsebene. Die Gasleitungen sind mehrfach abgewinkelt. Das Vorhandensein einer Entschwefelungsanlage ist der Patentschrift nicht zu entnehmen.

Der Erfindung liegt die Aufgabe zugrunde, den Investitionsaufwand zu senken, einen Kontakt der in den Kühlturm einmündenden Gase mit der Wandung zu vermeiden und keine Vermischung von Gas und Kühlturmschwaden zu erreichen. Vielmehr soll der Reingasstrahl zentral, umgeben vom Kühlturmschwaden, abgeleitet werden.

Dies wird erfindungsgemäß dadurch erreicht, daß zwei Reingasleitungen aus dem Anschlußflansch der Rauchgasentschwefelungsanlage direkt und geradlinig sowie mit/ohne vorgelagerte Zwischenabstützungen durch den Kühlturmmantel über die im wesentlichen vertikalen Austrittsstutzen der Umlenkeinrichtungen mit einem Anstellwinkel α so angeordnet sind, daß die Verlängerung der senkrechten und mittig aus den Austrittsstutzen austretenden Gasstrahlen die Rotationssymmetrieachse des Kühlturmes in der Höhe eines oberen Ringbalkens treffen, wobei der Anstellwinkel α abhängig ist von:
- dem Abstand s der beiden Reingasleitungen bezogen auf die horizontale Achsmitte im theoretischen Umlenkungspunkt,
- der Einbauhöhe h bezogen auf die horizontale Achsmitte im theoretischen Umlenkungspunkt,
- der Gesamthöhe H des Kühlturmes,
- dem Versatz a der Reingasleitungen,
- dem Anordnungsschema der Gesamtanlage und
- dem gewählten Gefälle der horizontalen Reingasleitungen,
und daß die Länge eines vertikalen Austrittsstutzens mindestens dem 1,5 fachen Reingasleitungsdurchmesser entspricht, wobei der Gasaustritt mindestens in Achshöhe des Anschlußflansches der Rauchgasentschwefelungsanlage angeordnet ist. Die Umlenkeinrichtungen weisen im wesentlichen vertikale Austrittsstutzen und Leitschaufeln auf.

Durch die Erfindung werden folgende Vorteile erreicht:
- Der Investaufwand wird aufgrund der Vermeidung von Umlenkungen und Zwischenauflagern erheblich reduziert.
- Durch die Verringerung der Druckverluste werden Betriebskosten eingespart (geringere Saugzugleistung notwendig).
- Ein Kontakt der Gase mit der Kühlturmwandung wird durch diese Art der Einleitung nahezu vollständig unterbunden.
- Aufgrund des geringen Druckverlustes in der Reingasleitung kommt es zu einer Kostenminimierung, die für die Antriebe der Saugzuggebläse aufgebracht werden muß.
- Die Erhöhung des Austrittsniveaus des Reingases wirkt sich positiv auf die Belastung der Schale aus. Spätere Investkosten für eine evtl. notwendige Schalensanierung können verspätet oder gar nicht mehr getätigt werden.
- Eine Erhöhung des Austrittsniveaus wirkt sich positiv auf die Immissionen aus, da die kinetische Energie (Impuls) des Reingases besser ausgenutzt wird.

Anhand eines Ausführungsbeispiels wird die Erfindung näher erläutert. Die dazugehörige Zeichnung zeigt:
- Fig. 1: Die Anordnung der Einbindung im Schnitt
- Fig. 2: Den Kühlturm im Schnitt
- Fig. 3: Die Umlenkeinrichtung im Schnitt
- Fig. 4: Die Ansicht des vertikalen Austrittsstutzens

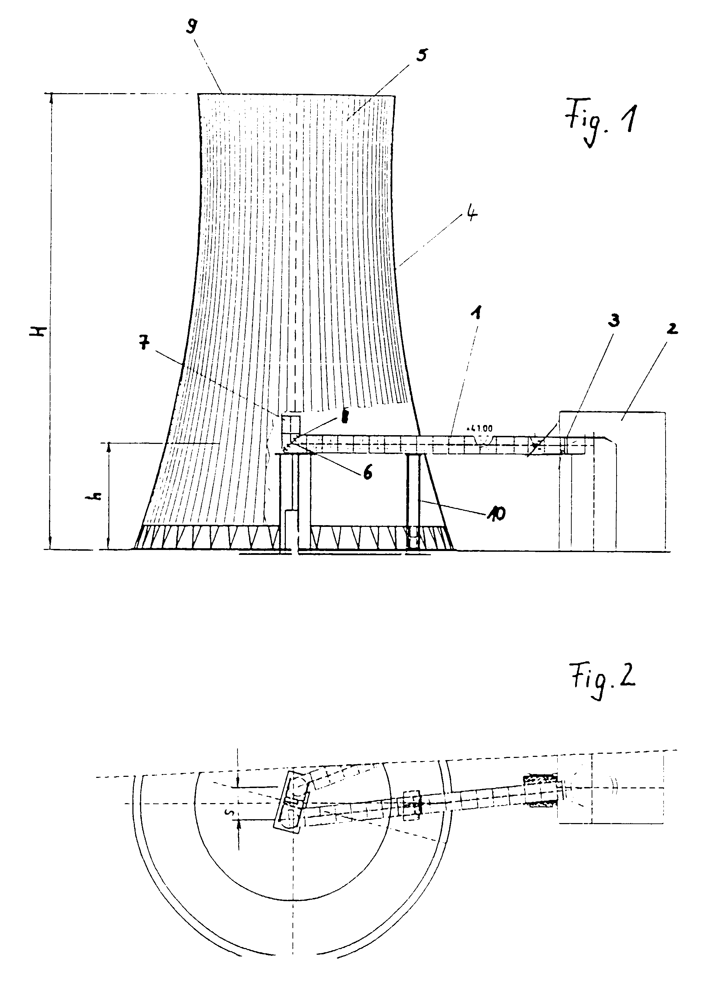

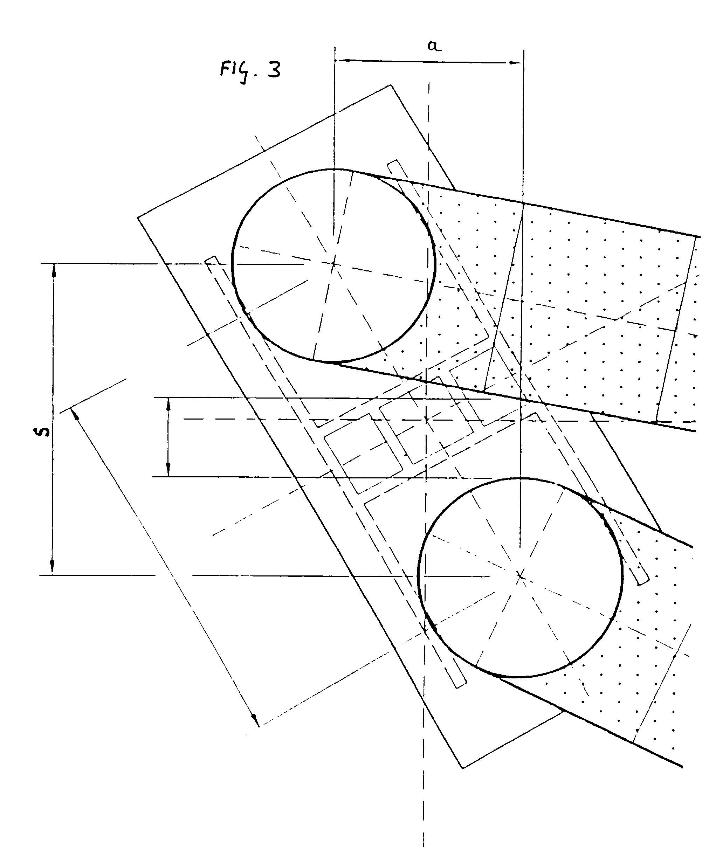

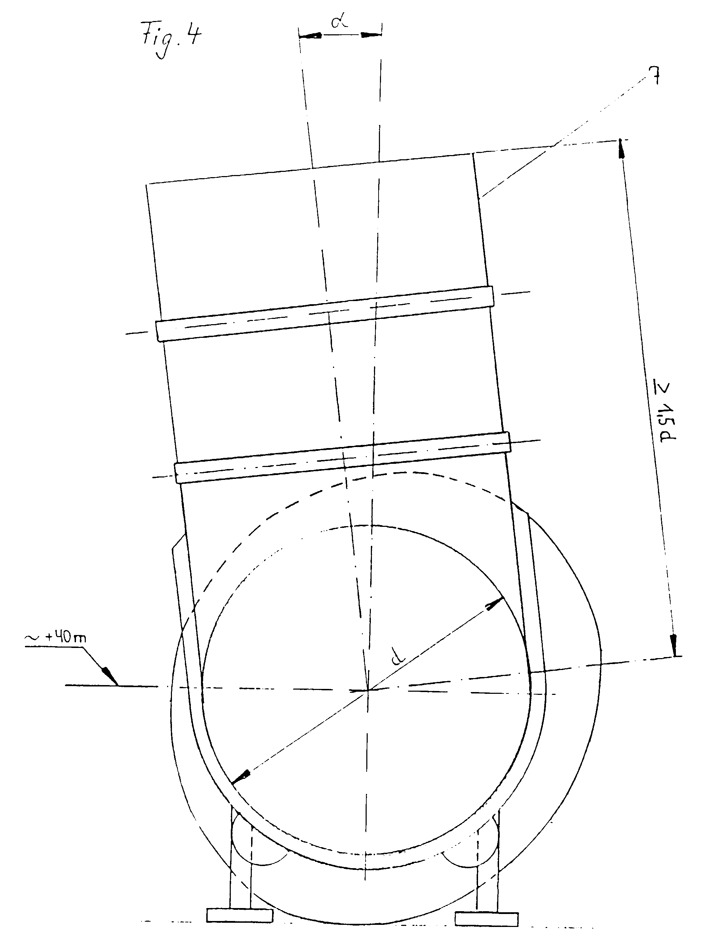

Die zwei Reingasleitungen 1 treten im oberen Bereich der Rauchgasentschwefelungsanlage 2 am Anschlußflansch 3 aus und werden direkt sowie geradlinig ohne Umlenkungen und Zwischenabstützungen in den Kühlturm 5 geführt (Fig. 1).
Die Reingasleitungen 1 weisen zwischen Rauchgasentschwefelungsanlage 2 und Kühlturm 5 keine Auflager auf. Die Einmündung der Kanalachse in den Kühlturmmantel 4 liegt in einer Höhe von ca. 40 m und damit weit oberhalb der Wasserverteilungsebene 11, die in einer Höhe von ca. 13 m mit Oberkante Tropfenfang angeordnet ist.
Im Kühlturm 5 werden die Reingasleitungen 1 durch die Stütze 10 getragen, wobei die Lastaufnahme auch anders erfolgen kann. Die gereinigten Rauchgase gelangen über die Umlenkeinrichtungen 6 zentrisch in den Kühlturm 5.
In den Umlenkeinrichtungen 6 sind Leitschaufeln 8, die eine Richtungsänderung des Reingases um 90 ° bewirken und vertikaler Austrittsstutzen 7 angeordnet (Fig. 4). Die vertikale Austrittsstutzen 7 sind unter einem Anstellwinkel α so angeordnet, daß die Verlängerung eines senkrechten und mittig aus einem der Austrittsstutzen 7 austretenden Gasstrahles die Rotationssymmetrieachse des Kühlturmes 5 in die Höhe des oberen Ringbalkens 9 trifft (Fig. 2 und 3).
Damit wird erreicht, daß der Reingasstrahl zentral und umgeben von Kühlturmschwaden ohne Kontakt mit dem Kühlturmmantel 4 abgeleitet wird. Es erfolgt nahezu keine Vermischung zwischen Reingasstrahl und Kühlturmschwaden.

Der Anstellwinkel α ist abhängig von:
- dem Abstand s der beiden Reingasleitungen bezogen auf die horizontale Achsmitte im theoretischen Umlenkungspunkt,
- der Einbauhöhe h bezogen auf die horizontale Achsmitte im theoretischen Umlenkungspunkt,
- der Gesamthöhe H des Kühlturmes,
- dem Versatz a der Reingasleitungen,
- dem Anordnungsschema der Gesamtanlage und
- dem gewählten Gefälle (ca. 1 %) der horizontalen Reingasrohre.

### Aufstellung der verwendeten Bezugszeichen

- 1: Reingasleitung
- 2: Rauchgasentschwefelungsanlage
- 3: Anschlußflansch
- 4: Kühlturmmantel
- 5: Kühlturm
- 6: Umlenkeinrichtung
- 7: vertikale Austrittsstutzen
- 8: Leitschaufeln
- 9: oberer Ringbalken
- 10: Stütze
- 11: Wasseraustrittsebene

## Patentansprüche

1. Anordnung zur Einbindung einer Reingasleitung einer Rauchgasentschwefelungsanlage eines mit fossilen Brennstoffen gefeuerten Kraftwerkes durch eine deutlich oberhalb einer Wasserverteilungsebene angeordnete und mit einem vertikalen Austrittsstutzen und Leitschaufeln versehenen Umlenkeinrichtung in das Zentrum des Querschnittes eines Kühlturmes,
**gekennzeichnet dadurch**,
daß zwei Reingasleitungen (1) aus dem Anschlußflansch (3) der Rauchgasentschwefelungsanlage (2) direkt und geradlinig sowie mit/ohne vorgelagerte Zwischenabstützungen durch den Kühlturmmantel (4) über die im wesentlichen vertikalen Austrittsstutzen (7) der Umlenkeinrichtungen (6) mit einem Anstellwinkel α so angeordnet sind, daß die Verlängerung der senkrechten und mittig aus den Austrittsstutzen (7) austretenden Gasstrahlen die Rotationssymmetrieachse des Kühlturmes (5) in der Höhe eines oberen Ringbalkens (9) treffen, wobei der Anstellwinkel α abhängig ist von:
- dem Abstand s der beiden Reingasleitungen (1) bezogen auf die horizontale Achsmitte im theoretischen Umlenkungspunkt,
- der Einbauhöhe h bezogen auf die horizontale Achsmitte im theoretischen Umlenkungspunkt,
- der Gesamthöhe H des Kühlturmes (5),
- dem Versatz a der Reingasleitungen (1),
- dem Anordnungsschema der Gesamtanlage und
- dem gewählten Gefälle der horizontalen Reingasleitungen (1),
und daß die Länge eines vertikalen Austrittsstutzens (7) mindestens dem 1,5fachen Reingasleitungsdurchmesser entspricht, wobei der Gasaustritt mindestens in Achshöhe des Anschlußflansches (3) der Rauchgasentschwefelungsanlage (2) angeordnet ist.

2. Anordnung nach Anspruch 1, gekennzeichnet dadurch, daß die Umlenkeinrichtung (6) einen vertikalen Austrittsstutzen (7) und Leitschaufeln (8) aufweisen.

## Claims

1. Arrangement for incorporating purified-gas lines from a flue-gas desulphurisation plant of a fossil fuel power station into the centre of the cross section of a cooling tower (5) by means of deflection devices (6) located significantly above a water distribution level, said deflection devices (6) each comprising a vertical outlet pipe an guide vanes,
**characterized in**
that two purified-gas lines (1) from an outlet flange (3) of the flue-gas desulphurisation plant (2) are arranged directly and in a straight line, with or without intermediate support structures, through the cooling tower shell (4) by means of said substantially vertical outlet pipe (7) of said deflection device (6) at an incidence angle α so that the extension of gas jets exiting vertically and centrally from the outlet pipes (7) meet the axis of rotational symmetry of the cooling tower (5) at a hight of an upper ring girder (9), with said incidence angle α being dependent on:
- the distance s of both purified-gas lines (1) in relation to the horizontal axis centre at the theoretical deflection point,
- the installation hight h in relation to the horizontal axis centre at the theoretical deflection point,
- the overall hight H of the cooling tower (5),
- the off-set a of the purified-gas lines (1),
- the lay-out scheme of the entire plant and
- the chosen slope of the horizontal purified-gas lines (1),
and that the length of each vertical outlet pipe (7) is at least 1,5 times the diameter of the purified-gas lines, with the gas outlet is at least in the same axial hight as the outlet flange (3) of the flue-gas desulphurisation plant (2).

2. Arrangement according to claim 1, characterized in that the deflection devices (6) comprise a vertical outlet pipe (7) and guide vanes (8).

## Revendications

1. Disposition pour incorporer une canalisation de gaz purifié d'une installation de désulfuration des gaz de fumée d'une usine génératrice chauffée par des combustibles fossiles dans le centre de la coupe transversale d'une tour de refroidissment par moyen d'un dispositif déflecteur disposé clairement au-dessus d'un plan de distribution d'eau et muni d'une tubulure verticale et des pales directrices ou fixes,
caractérisée en ce
que les deux canalisations de gaz purifié (1) du bourrelet de raccordement (3) de l'installation de désulfuration des gaz de fumée (2) sont disposées de manière directe et rectiligne ainsi que avec/sans appuis intermédiaires prédisposés à travers de la chemise de tour de refroidissement (4) sur les tubulures de sortie (7) essentiellement verticales des dispositifs déflecteurs (6) avec un angle d'inclinaison α, de sorte que l'allongement des rayons de gaz perpendiculaires et sortant des tubulures de sortie (7) de mainère centrée met l'axe de symétrie de révolution de la tour de refroidissement (5) au niveau d'une poutre ceinture supérieure (9), l'angle d'inclinaison α étant fonction:
- de la distance s entre les deux canalisations de gaz purifié (1) par rapport au centre d'axe horizontal au point de déflection théorique,
- de la hauteur d'installation h par rapport au centre d'axe horizontal au point de déflection théorique,
- de la hauteur totale H de la tour de refroidissement (5),
- de l'embrèvement a des canalisations de gaz purifié (1),
- du schéma d'arrangement de l'installation entière et
- de l'inclinaison choisie des canalisations de gaz purifié horizontales (1),
et en ce que la longueur d'une tubulure de sortie verticale (7) correspond au moins à 1.5 fois du diamètre de la canalisation de gaz purifié, la sortie de gaz étant disposé au moins à la hauteur d'axe du bourrelet de raccordement (3) de l'installation de désulfuration des gaz de fumée (2).

2. Disposition selon revendication 1, caractérisée en ce que le dispositif déflecteur (6) présente une tubulure de sortie verticale (7) et des pales directrices ou fixes (8).
